# EUROPÄISCHE PATENTSCHRIFT

(11) **EP 0 919 457 B1**
(45) Veröffentlichungstag und Bekanntmachung des Hinweises auf die Patenterteilung: **11.07.2001**
(21) Anmeldenummer: 98120384.7
(22) Anmeldetag: 28.10.1998
(51) Int. Cl.: B62H 3/00, B62H 5/00

(54) **Fahrradständer, der schwenkbar an einem Fahrrad angreift**
Bicycle stand pivotably mounted on a bicycle
Support de bicyclette monté pivotant par rapport à la bicyclette

(30) Priorität: 26.11.1997 DE 19752349
(43) Veröffentlichungstag der Anmeldung: 02.06.1999
(73) Patentinhaber: Welte, Rainer, 79117 Freiburg (DE)
(72) Erfinder: Welte, Rainer, 79117 Freiburg (DE)
(74) Vertreter: Patent- und Rechtsanwaltssozietät, Maucher, Börjes & Kollegen

(56) Entgegenhaltungen:
- DE-A- 4 310 590

## Beschreibung

Die Erfindung betrifft einen Fahrradständer mit Bodenanker, wobei der Fahrradständers schwenkbar und gegebenenfalls lösbar an einem Fahrrad - mit oder ohne Hilfsmotor oder an einem Motorfahrrad (Mofa) - anbringbar ist oder angreift und das Fahrrad in einer Gebrauchsstellung mit seinem vom Fahrrad abgewandten freien Ende gegenüber einer Stellfläche abstützt, wobei ein mit der Stellfläche für das Fahrrad fest verbindbarer Bodenanker vorgesehen ist, mit dem das freie Ende des Fahrradständers lösbar kuppelbar ist.

Normale an Fahrrädern schwenkbar angebrachte Fahrradständer sind in vielfältiger Form bekannt. Um die Standsicherheit eines Fahrrades mit Hilfe seines Fahrradständers bestmöglich zu gestalten, hat man versucht, die Angriffsstelle dieses Fahrradständers am Fahrrad selbst so gut wie möglich festzulegen und/oder das freie Ende dieses Fahrrades mit einem Fuß zu versehen, der an der Stellfläche eine hohe Reibung ergibt, also beispielsweise aufgerauht oder aus einem speziellen Werkstoff gefertigt ist.

Eine weitere Möglichkeit besteht darin, das freie Ende dieses Fahrradständers mit einem möglichst großflächigen Fuß zu versehen, jedoch ist dieser Möglichkeit eine Grenze dadurch gesetzt, daß der Fahrradständer bei Nichtgebrauch in einer hochgeklappten Lage eng am Fahrrad anliegen muß, so daß ein entsprechend großflächig gestaltetes freies Ende zu einem unerwünschten Vorsprung an dem Fahrrad führen würde.

Somit läßt sich nicht oder nicht immer vermeiden, daß beispielsweise bei starkem Wind oder Sturm oder durch körperliche Berührung oder beim Beladen des Fahrrades dessen Ständer nicht mehr ausreicht, um das Gleichgewicht dieses Fahrrades zu halten, so daß es umkippen kann, was zu Beschädigungen an dem Fahrrad selbst oder an in seiner Nähe befindlichen weiteren Gegenständen wie anderen Fahrrädern, geparkten Kraftfahrzeugen oder dergleichen führen kann.

Aus DE-43 10 590 A1, Fig.11 ist zwar im Zusammenhang mit einer Anschließvorrichtung, die gleichzeitig dem Diebstahl des Fahrrades und einzelner Teile davon möglichst großen Widerstand entgegensetzen soll, ein Fahrradständer der eingangs genannten Art bekannt, bei welchem aber das freie Ende als in Gebrauchsstellung etwa horizontal orientierte Hülse ausgebildet ist, die über einen entsprechend orientierten Bolzen als Bodenanker gesteckt werden muß. Dies bedeutet, daß beim Kuppeln dieses Fahrradständers mit dem Bodenanker das ganze Fahrrad in Querrichtung versetzt und dabei mit der Öffnung der Hülse der entsprechende Bolzen getroffen werden muß. Gleichzeitig bildet dabei dieser Bodenanker in Form eines hochstehenden Bolzens, der von der Hülse auch unterseitig umgriffen werden können muß, eine Stolperfalle, wenn kein Fahrrad angeschlossen ist. Außerdem ist dieser Fahrradständer als aufwendig anzusehen, weil in seinem Inneren ein Seilzug untergebracht sein muß, der über die gesamte Länge dieses bekannten Ständers verläuft, um die dort vorgesehene spezielle Verriegelung von einer Stelle aus betätigen zu können, von der gleichzeitig auch ein Speichenschloß betätigt wird.

Der Erfindung liegt demgegenüber die Aufgabe zugrunde, einen Fahrradständer der eingangs genannten Art zu schaffen, mit dem die Standfestigkeit des gestützten Fahrrades verbessert und derart erhöht werden kann, daß das Fahrrad selbst dann stehenbleibt, wenn es einer erhöhten Kraft ausgesetzt oder mit einer außerhalb seines Schwerpunktes befindlichen Last beladen wird, ohne daß das Fahrrad beim Kuppeln seines Fahrradständers mit dem Bodenanker in Querrichtung versetzt werden muß, um die Kupplungsbewegung durchzuführen. Dabei soll der Fahrradständer und sein freies Ende derart ausgestaltet werden können, daß die Kupplung mit dem Bodenanker als Diebstahlsicherung wirken kann, ohne daß innerhalb des Fahrradständers ein Seilzug verlaufen muß.

Zur Lösung dieser Aufgabe ist der eingangs definierte Fahrradständer dadurch gekennzeichnet, daß der Bodenanker ein oberseitig flaches Bodenteil mit einer nach oben an der Oberseite offenen Vertiefung ist, welche Vertiefung in Gebrauchsstellung abwärts gerichtet ist, und daß an dem im eingebauten Zustand dem Fahrrad abgewandten freien Ende des Ständers ein in diese Vertiefung passender Haltevorsprung angeordnet ist.

Auf diese Weise kann beim Abstellen des Fahrrades der Haltevorsprung des Ständers von oben her in die Vertiefung des Bodenteiles eingesetzt werden, so daß es also bei der Kupplung zwischen Haltevorsprung und Bodenteil keiner seitlichen Bewegung des Fahrrades bedarf. Die Öffnung oder Vertiefung des Bodenteiles kann vielmehr ganz einfach getroffen werden. Wenn dabei das Fahrrad etwas seitlich versetzt wäre, genügt ein geringfügiges Verkippen, um dennoch in die Vertiefung des Bodenankers zu treffen. Es ergibt sich dann eine Abstützung des Fahrrades mit seinem Ständer, die erheblich höhere Kräfte auf das Fahrrad aufnehmen kann, so daß das Fahrrad auch bei starkem Wind oder sonstigen zusätzlichen Belastungen gegen ein Umfallen gesichert ist. Durch die flache Ausbildung des den Bodenanker bildenden Bodenteiles wird dabei gleichzeitig vermieden, daß dieser Bodenanker bei Nichtbenutzung eine Stolperfalle bildet.

Der Abstand der Oberseite des Bodenteiles von seiner Unterseite kann dabei kleiner als die größte horizontale Abmessung dieses Bodenteiles sein. Es handelt sich also um einen Bodenanker, der flach und etwa plattenförmig gestaltet ist, also gegenüber der Stellfläche kaum übersteht. Der Abstand zwischen Oberseite und Unterseite muß nur - im Bereich der Vertiefung - groß genug sein, um diese Vertiefung aufnehmen zu können, die unter Umständen den gesamten Bodenanker durchsetzen oder aber als nach unten geschlossenes Sackloch ausgebildet sein kann, so daß von unten her beispielsweise auch bei der Montage keine Fremdkörper eindringen können.

Die flache und plattenförmige Ausbildung des Bodenteiles ermöglicht es, daß das Bodenteil mit seiner Unterseite auf der Stellfläche für Fahrräder oder einer Aussparung in dieser Stellfläche aufliegend befestigbar, insbesondere unlösbar befestigbar ist. Dennoch ergibt sich keine Stolperfalle wie bei einem gegenüber dieser Fläche hochstehenden und an seinem gesamten Umfang zu umgreifenden Bolzen.

Dabei kann das Bodenteil im Bereich der Vertiefung seine größte Dicke haben und dem Rand oder der Mündung der Vertiefung benachbarte Teile seiner Oberseite können zu dem Rand hin schräg oder abgerundet derart verlaufen, daß die Dicke des Bodenteiles zu wenigstens einem Randbereich hin, insbesondere zu seinem umlaufenden Rand hin abnimmt. Das Bodenteil hat dadurch also praktisch die Form eines sehr flachen Kegels oder Kegelstumpfes oder Kugelabschnittes (Kugelkalotte), was die Gefahr für Fußgänger, darüber zu stolpern, weiter vermindert. Dennoch hat das Bodenteil insbesondere in seinem Zentrum eine ausreichende Abmessung, um eine genügend große Kupplungs-Vertiefung zu enthalten.

Das Bodenteil kann eine etwa kreisrunde oder ovale Außenform haben. Es ist aber auch denkbar, daß es ein irgendwie geartetes Vieleck bildet. Dadurch kann es an jeweilige Platzverhältnisse angepaßt sein.

Um das Kuppeln des Ständers und seines Haltevorsprunges mit dem Bodenanker noch weiter zu erleichtern, kann die Vertiefung an ihrem Eintritt einen an der Oberseite erweiterten und sich nach unten verengenden oder verjüngenden Einführtrichter aufweisen. Ferner kann der Haltevorsprung ein abgerundetes oder sich verjüngendes oder konisches Einführende aufweisen insbesondere kugelförmig ausgebildet sein. Um so leichter wird beim Abstellen eines Fahrrades die Kupplungsvertiefung mit dem Haltevorsprung des Fahrradständers getroffen, selbst wenn das Fahrrad nicht ganz präzise in einer zutreffenden Lage zu dem Bodenanker steht. Durch den Einführvorgang können dabei sogar kleine Versatzbewegungen des Fahrrades bei seiner Verankerung erfolgen.

Eine besonders vorteilhafte und zweckmäßige Ausgestaltung der Erfindung kann darin bestehen, daß die Kupplung zwischen dem freien Ende des Fahrradständers mit dem dort vorgesehenen Vorsprung und dem Bodenteil eine lösbare Rastkupplung ist. In Gebrauchsstellung kann also zwischen dem freien Ende des Fahrradständers und dem Bodenanker Kraftschluß bestehen, so daß noch größere Kräfte auf das Fahrrad einwirken können, ohne daß es umfallen kann.

Eine Ausgestaltung der Erfindung von ganz erheblicher Bedeutung, die dem Fahrradständer eine zusätzliche Funktion verleiht, kann darin bestehen, daß die Kupplung zwischen dem Fahrradständer und dem Bodenteil ein Sperrschloß aufweist, mit welchem die Kupplung in Kuppelposition gegen ein Lösen sperrbar ist. Dieses die Kupplung sperrende Schloß kann also in vorteilhafter Weise unmittelbar an dem Haltevorsprung angreifen, so daß Seilzüge oder dergleichen innerhalb des Fahrradständers vermieden werden. Ein entsprechend einfaches und robustes Schloß kann Verwendung finden. Der Benutzer braucht dann sein Fahrrad beispielsweise bei einem kurzen Anhalten vor einem Geschäft oder einer Behörde oder wo auch immer entsprechende Fahrradparkplätze mit solchen Bodenteilen ausgestattet sind, sein Fahrrad nicht aufwendig mit einer Kette und einem Schloß zu sichern, sondern für eine kurze Abstellzeit genügt die Sperre der Bodenkupplung, um das Fahrrad gegen eine schnelle Mitnahme zu sperren. Bei einer entsprechend festen und sicheren Verbindung zwischen Fahrradständer und Fahrrad kann eine solche Schließmöglichkeit sogar als Diebstahlsicherung für das gesamte Fahrrad ausreichen.

Eine besonders einfache und schnelle Bedienbarkeit ergibt sich dabei, wenn der Fahrradständer und/oder das Bodenteil ein beim Zusammenstecken der Teile selbsttätig einrastendes Schloß aufweist, dessen Riegel zum Lösen der Kupplung zurückziehbar, insbesondere mittels eines Schlüssels öffenbar ist. Bei einer solchen Ausgestaltung braucht der Benutzer sein Fahrrad nur mit dem Haltevorsprung in die Kupplungsvertiefung .einzuführen, um schon den Verschluß auszulösen, was sehr schnell geht und vor allem sehr bequem ist. Vor allem aus Bequemlichkeit wird häufig das Abschließen des Fahrrades unterlassen, so daß nunmehr die Bequemlichkeit kein Hinderungsgrund für eine Diebstahlsicherung des Fahrrades mehr darstellt. Vor allem im Falle großer Eiligkeit, beispielsweise an einem Bahnhof, wo ein Zug erreicht werden muß, ist dies eine besonders zweckmäßige Ausgestaltung, da der Benutzer auch sehr kurz vor Abfahrt des Zuges sein Fahrrad noch ganz schnell sichern kann, während er nach der Rückkehr genügend Zeit hat, um das Schloß dann mit Hilfe eines Schlüssels wieder zu öffnen.

Befindet sich das Schloß in dem Fahrradständer bzw. dem Haltevorsprung, kann jeder Fahrradbesitzer seinen individuellen Schlüssel haben. Ist das Schloß in der Bodenplatte untergebracht, könnten entsprechende Schlüssel von dem Besitzer der Stellfläche vergeben oder zeitweise vermietet werden oder der Inhaber der Stellfläche könnte - beispielsweise gegen eine Gebühr - die Kupplung bei der Rückkehr des Fahrradbesitzers öffnen.

Ausgestaltungen des Haltevorsprunges und auch des Bodenteiles zur Verbesserung der Bedienbarkeit und der Möglichkeit eines Kraftschlusses zwischen diesen Teilen sind Gegenstand der Ansprüche 11 bis 16.

Anspruch 11 enthält dabei Merkmale, die das Einführen des Haltevorsprunges in die Kupplungsvertiefung trotz einer anschließenden kraftschlüssigen Verbindung erleichtern. Der verstellbare Bolzen braucht vom Benutzer nur mit dem Fuß niedergetreten zu werden, wonach das Einführen des Vorsprunges in die Vertiefung ermöglicht wird, weil das oder die Halteteile in das Innere des Vorsprunges zurückweichen können. Wird danach der innenseitige Bolzen vom Benutzer freigegeben, wird er zurückverstellt und verdrängt dadurch den oder die Haltekörper wieder nach außen, so daß diese in eine entsprechende Hinterschneidung der Kupplungs-vertiefung eintreten können, so daß dann das freie Ende des Fahrradständers gegen ein Herausziehen aus der Vertiefung des Bodenteiles gesperrt ist. Wie schon erwähnt, kann diese Sperrstellung dann zusätzlich mit einem Schloß, insbesondere einem Schnappschloß gesichert sein, welches beim Verstellen dieses Bolzens und Einführen des Haltevorsprunges in die Kupplungsvertiefung selbsttätig in Sperrstellung springt.

Nähere Einzelheiten zur Ausgestaltung dieses Bolzens und der von ihm sperrbaren oder freigebbaren Halteteile sind in den Ansprüchen 12, 13 und 14 verdeutlicht.

Vor allem die Maßnahmen des Anspruches 14 erlauben es dabei, das Fahrrad sogar in Kupplungsposition noch etwas um die durch seine beiden auf der Stellfläche stehenden Räder verlaufende Linie zu kippen, was umgekehrt auch wiederum das Einkuppeln beim Abstellen des Fahrrades erleichtert. Außerdem kann unter beengten Verhältnissen dadurch eine bessere Anpassung und Handhabung erfolgen.

Vor allem bei Kombination einzelner oder mehrerer der vorbeschriebenen Merkmale und Maßnahmen ergibt sich ein Fahrradständer, der preiswert herstellbar ist und eine einfache Bedienung erlaubt, ohne daß in seinem Inneren ein störanfälliger Seilzug untergebracht werden muß. Der zugehörige Bodenanker kann dabei auf einfache Weise so gestaltet sein, daß er trotz einer festen Verankerung mit der Stellfläche keine Stolperfalle bildet, wobei diese Verankerung durch Dübeln, Einbetonieren oder in sonstiger Weise erfolgen kann, wofür dieser Bodenanker entsprechende Vorsprünge oder Befestigungslochungen oder beliebige sonstige Befestigungsmittel aufweisen kann. Auch dieser Bodenanker stellt dabei ein wesentlich preiswerteres Teil dar als die sonst häufig auf öffentlichen Fahrradstellplätzen installierten umfangreichen Fahrradhalterungen, die auch bei Nichtbenutzung erheblichen Platz wegnehmen und in den Fällen, in denen sie ein Rad des Fahrrades teilweise umgreifen, sogar zu einer Beschädigung an dem Fahrrad selbst führen können.

In zweckmäßiger und günstiger Weise wird vielmehr der bei dem Fahrrad vorhandene Fahrradständer selbst ausgenutzt, der auch dann als solcher benutzt werden kann, wenn kein Bodenteil oder Bodenanker vorhanden ist, wobei dann das freie Ende dieses Fahrradständers in konventioneller Weise auf einer Stellfläche abgestützt werden kann.

Nachstehend ist ein Ausführungsbeispiel der Erfindung anhand der Zeichnung näher beschrieben. Es zeigt in etwas schematisierter und teilweise perspektivischer Darstellung:
- Fig.1: den unteren Teil eines Fahrradständers mit seinem freien Ende und einem daran angeordneten Haltevorsprung oberhalb eines zugehörigen Bodenankers mit an dessen Oberseite offener Vertiefung, in welche der Haltevorsprung paßt,
- Fig.2: eine der Fig.1 entsprechende Darstellung, bei welcher der Haltevorsprung schon teilweise in die Kupplungs-vertiefung eingesetzt ist, seine Kupplungsposition aber noch nicht erreicht hat, wobei in vorteilhafter Weise eine solche Zwischenstellung ebenfalls vor allem dann anwendbar ist, wenn der Schlüssel für das in dem Ständer befindliche Schloß nicht vorhanden sein sollte,
- Fig.3: eine den Figuren 1 und 2 entsprechende Darstellung, bei welcher sich der Haltevorsprung in Kupplungs- oder Sperrstellung innerhalb der Vertiefung des Bodenankers befindet,
- Fig.4: einen Längsschnitt durch den Haltevorsprung und den Bodenanker in Kupplungsposition, wobei sich die Schnittebene etwa parallel zu der Ebene befindet, die parallel zu einer Längsmittelebene durch das Fahrrad verläuft sowie
- Fig.5: einen Längsschnitt durch den Kupplungsvorsprung und den Bodenanker etwa rechtwinklig zu der Schnittebene der Fig.4.

Von einem im ganzen mit 1 bezeichneten Fahrradständer ist nur dessen im vorliegenden Fall interessierendes unteres, dem Fahrrad selbst abgewandtes Teil dargestellt. In üblicher Weise kann dieser Fahrradständer 1 mit seinem in den Figuren nicht sichtbaren weiteren Teil schwenkbar und gegebenenfalls lösbar, bevorzugt aber möglichst gut und sicher an einem Fahrrad befestigt sein, wobei unter "Fahrrad" ein solches mit oder ohne Hilfsmotor oder auch ein Motorfahrrad (Mofa), gegebenenfalls sogar Moped verstanden werden soll.

Dieser an dem Fahrrad anbringbare oder angebrachte Fahrradständer 1 stützt ein solches Fahrrad in Gebrauchsstellung mit dem in den Zeichnungen erkennbaren, noch näher zu beschreibenden freien Ende gegenüber einer Stellfläche ab. Dabei ist ein mit dieser Stellfläche fest verbindbarer oder fest verbundener Bodenanker 2 vorgesehen, mit dem das freie Ende des Fahrradständers 1 lösbar kuppelbar ist, so daß sich ein erheblich festerer Stand und eine bessere Abstützung eines Fahrrades ergibt, als wenn das freie Ende seines Fahrradständers 1 lediglich auf der Stellfläche abgestützt wird.

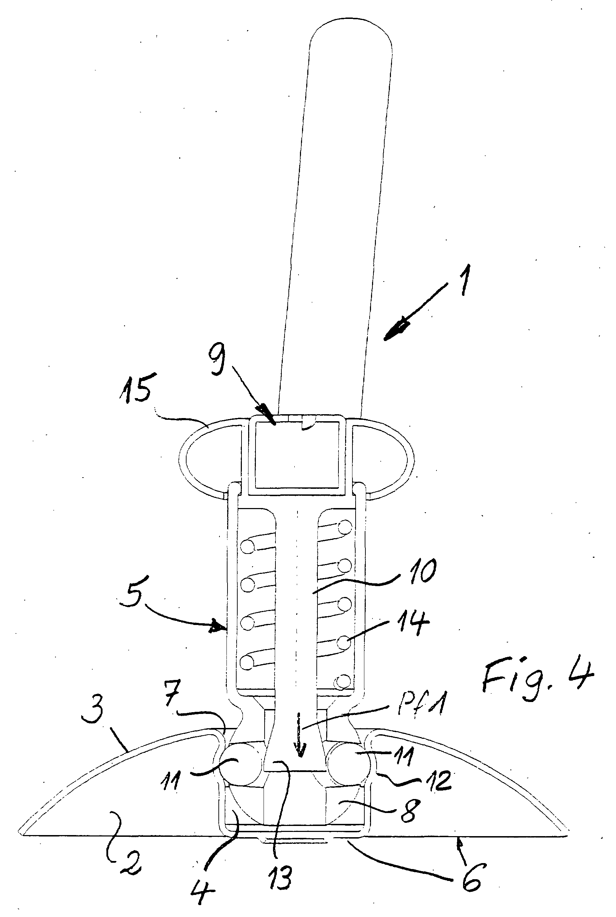

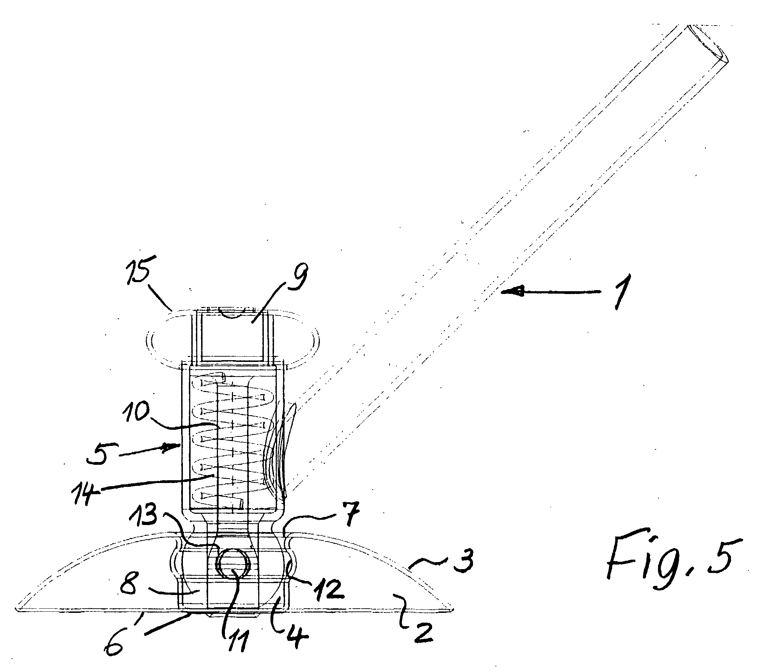

In allen Figuren erkennt man, daß der Bodenanker 2 ein oberseitig flaches Bodenteil mit einer nach oben an seiner Oberseite 3 offenen Vertiefung 4 ist, welche Vertiefung 4 in Gebrauchsstellung gemäß Fig.4 und 5 abwärtsgerichtet ist. An dem dem Fahrrad abgewandten freien Ende des Ständers 1 ist hingegen ein in diese Vertiefung 4 passender (vgl.Fig.4 und 5) Haltevorsprung 5 angeordnet.

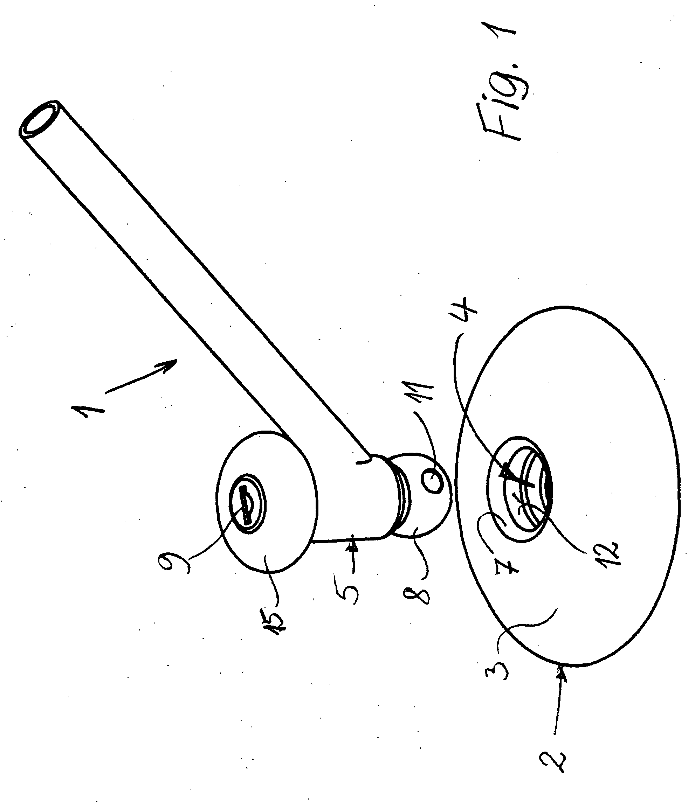

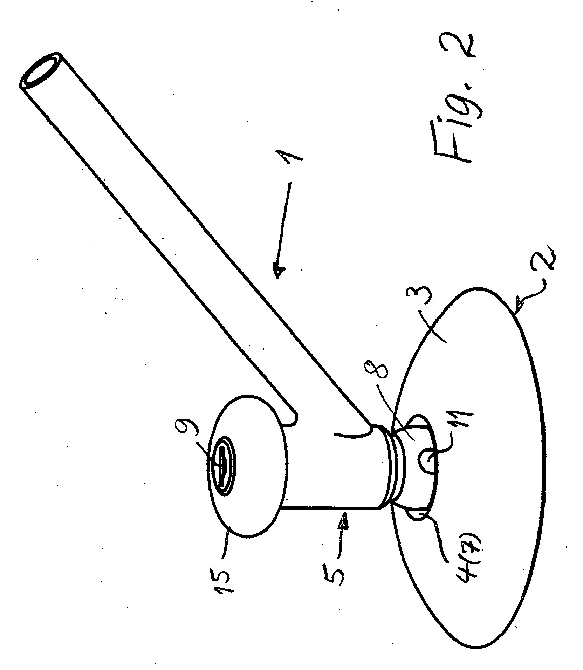

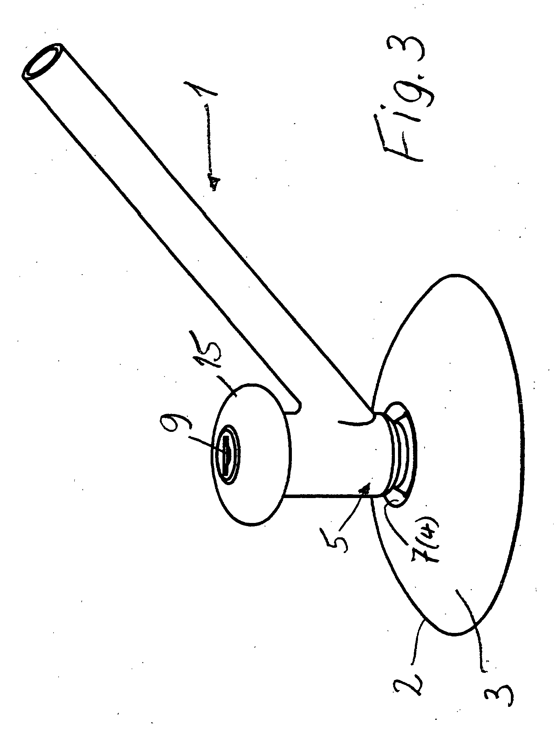

Beim Vergleich der Figuren 1 bis 3 und dann auch Berücksichtigung der Figuren 4 und 5 wird deutlich, daß der Haltevorsprung 5 von oben her in die nach oben offene Vertiefung 4 eingeführt werden kann, so daß sich eine erheblich bessere Standfestigkeit eines derart abgestützten Fahrrades ergibt, weil nicht nur vertikale Kräfte wie beim Abstützen auf einer Stellfläche, sondern auch Querkräfte dazu und - bei Berücksichtigung der nachfolgenden Beschreibung weiterer Ausgestaltungen - sogar Zugkräfte aufgenommen werden können, so daß also ein Fahrrad mit einem derartigen Fahrradständer 1 und dem damit zusammenwirkenden Bodenanker 2 einen sehr sicheren Stand erhält, selbst wenn es unsymmetrisch belastet oder beladen wird. Windkräfte oder Ungeschicklichkeiten können somit ein derartig abgestütztes Fahrrad nicht umwerfen.

Vor allem in den Figuren 4 und 5 erkennt man, daß der Abstand der Oberseite 3 des Bodenteiles 2 von seiner Unterseite 6, also die größte Dicke dieses Bodenteiles oder Bodenankers 2, kleiner als die größte horizontale Abmessung ist. Es ergibt sich also ein flaches, auf einer Stellfläche praktisch nicht störendes Bodenteil 2, an dem dennoch die kraft- und/oder formschlüssige Kupplung des freien Endes des Fahrradständers 1 mit seinem Haltevorsprung 5 erfolgen kann.

Das Bodenteil 2 kann mit seiner Unterseite. 6 auf der Stellfläche. für Fahrräder oder auch eventuell in einer flachen Vertiefung dieser Stellfläche aufliegend befestigt werden, wobei es zweckmäßig ist, eine Vielzahl solcher Bodenteile 2 in einem solchen Abstand vorzusehen, daß entsprechend viele Fahrräder abgestellt werden können. Dies kann vor allem auf öffentlichen Stellplätzen für Fahrräder in vorteilhafter Weise und sehr preiswert gegenüber bisher üblichen aufwendigen Fahrrad-Haltegestellen erfolgen. Aufgrund der geringen Abmessung des Bodenteiles 2 läßt sich dabei pro Flächeneinheit auch eine größere Zahl von Fahrrädern unterbringen.

Das Bodenteil 2 hat im Bereich der Vertiefung 4 seine größte Dicke und dem Rand dieser Vertiefung 4 benachbarte Teile seiner Oberseite 3 verlaufen im Ausführungsbeispiel abgerundet zu diesem Rand hin, so daß also die Dicke des Bodenteiles 2 zu dem umlaufenden Rand hin abnimmt. Dadurch wird vermieden, daß das Bodenteil 2 eine Stolperfalle bildet und darüber hinaus wird auf einer Stellfläche für zahlreiche Fahrräder das Verschieben von Fahrrädern auch über unbenutzte Bodenteile 2 hinweg erleichtert.

Die Zeichnungen zeigen außerdem, daß die Vertiefung oder Kupplungsöffnung 4 an ihrem Eintritt einen an der Oberseite 3 erweiterten und sich nach unten verengenden oder verjüngenden Einführtrichter 7 aufweist. Gleichzeitig hat der Haltevorsprung 5 ein abgerundetes Einführende 8, das in diesem Falle sogar kugelförmig ausgebildet ist. Der Benutzer kann auf diese Weise die Kupplungsvertiefung 4 mit dem Halteende 5 gut treffen, auch wenn das Fahrrad sich nicht in einer ganz genau präzisen Position relativ zu dem Bodenteil 2 befindet. Dabei hat das Bodenteil 2 im Ausführungsbeispiel eine kreisrunde Außenform, so daß es in beliebiger Drehlage am Boden verankert werden kann, sei es mit Dübeln, sei es mit einbetonierbaren und nach unten reichenden Vorsprüngen oder dergleichen Ankern.

Gemäß Fig.4 und 5 ist die Vertiefung 4 als nach unten geschlossenes Sackloch ausgebildet, so daß bei der Montage beispielsweise in noch flüssigem Beton von unten her dieser nicht in die Vertiefung 4 eindringen kann.

Vor allem in Fig.4 und 5 ist dargestellt, daß die Kupplung zwischen dem freien Ende des Fahrradständers 1 mit dem dort vorgesehenen Haltevorsprung 5 und dem daran befindlichen Einführende 8 einerseits und dem Bodenteil oder Bodenanker 2 andererseits eine lösbare Rastkupplung ist, die in Gebrauchsstellung auch Zugkräfte aufnehmen kann, so daß ein derartig abgestütztes Fahrrad nicht mehr unbeabsichtigt umgeworfen und selbst von einem starken Sturm nicht umgeweht werden kann.

Dabei ist auch angedeutet, daß diese Kupplung zwischen Fahrradständer 1 und Bodenteil 2 ein Sperrschloß 9 aufweisen kann, mit welchem die Kupplung in Kupplungsposition gegen ein Lösen gesperrt werden kann, wobei dieses Fahrradschloß 9 an dem bodenseitigen freien Ende und dabei zweckmäßigerweise an dem Haltevorsprung 5 installiert ist. Dabei kann es sich um ein beim Zusammenstecken des Haltevorsprunges 5 bzw. seines Einführendes 8 mit dem Bodenanker 2 selbsttätig einrastendes Schloß handeln, dessen der besseren Übersicht wegen nicht dargestellter Riegel das Lösen der Kupplung verhindert und sperrt, aber zum Lösen dieser Kupplung zurückziehbar ist und zwar zweckmäßigerweise mit Hilfe eines individuellen Schlüssels, der dem Fahrradbesitzer gehören kann.

Im Ausführungsbeispiel ist eine besonders zweckmäßige Gestaltung der kraftschlüssigen Kupplung zwischen Einführende 8 und Bodenanker 2 dargestellt. Dabei ist vorgesehen, daß der in die Vertiefung 4 des Bodenteiles 2 passende Haltevorsprung 5 bzw. sein Einführende 8 einen gegen die Kraft einer Rückstellfeder 14 etwa in Verlängerung des Fahrradständers 1 bzw. in axialer Richtung des Haltevorsprunges 5 verstellbaren Bolzen 10 und in seinem in die Vertiefung 4 eingreifenden Einführende 8 wenigstens einen, im Ausführungsbeispiel zwei über dessen Kontur hinaus verstellbare Sperr- oder Halteteile 11 zum Eingreifen in eine Hinterschneidung oder Erweiterung 12 der Vertiefung aufweist. In seiner in Fig.4 und 5 dargestellten Ausgangslage liegt dabei der verstellbare Bolzen 10, diese Halteteile 11 in ihrer über die Kontur des Vorsprunges 5 bzw. des Einführendes 8 ragenden, Lage fest, so daß also ein Lösen der Kupplung zwischen Haltevorsprung 5 und Bodenanker 2 verhindert wird. Gegen die Kraft der Feder 14 kann dieser Bolzen 10 abwärts verstellt und dadurch die Halteteile 11 freigeben, so daß sie zum Inneren des Vorsprunges 5 hin ausweichen können, was das Herausziehen des Einführendes 8 aus der Vertiefung 4 und auch deren Erweiterung oder Hinterschneidung 12 ermöglicht.

Dies wird dadurch verwirklicht, daß der innerhalb des Kupplungsvorsprunges 5 und des Einführendes 8 verstellbare Bolzen 10 im Bereich des Einführendes 8 eine Verdickung 13 hat, die in Ausgangslage die beiden Haltekörper oder Halteteile 11 in der vor allem gut in Fig.4 erkennbaren Sperrstellung hält und beim Verschieben in axialer Richtung gegen die Rückstellkraft der Feder 14 mittels eines gegenüber der Verdickung 13 oberhalb dieser angeordneten verminderten Querschnittes genügend Platz freigibt, damit die Halteteile 11 etwa radial in das Innere des Vorsprunges 5 und seines Einführendes 8 zurückweichen können. In verschobener Position gibt also der Bolzen 10 und vor allem seine Verdickung 13 den Verstellweg für diese Halteteile 11 nach innen frei, so daß einem Herausziehen des Einführendes 8 aus dem Bodenanker 2 und dessen mit einer Hinterschneidung 12 versehenen Vertiefung 4 nichts mehr im Wege steht.

Die Bedienung dieses verstellbaren Bolzens 10 ist dabei sehr einfach, weil der Benutzer mit einem Fuß von oben her die axiale Verstellung sehr einfach bewirken kann.

Als durch den Bolzen 1 0 und seine Verdickung 13 sperrbare Halteteile 11 sind im Ausführungsbeispiel zwei Kugeln vorgesehen, die sich besonders gut als Rastvorsprünge eignen. Als Hinterschneidung 12 ist in der Vertiefung 4 eine an deren gesamten Innenumfang umlaufende, in Gebrauchsstellung etwa horizontale Rille vorgesehen, in welche die Kugeln als Halteteile 11 in ihrer Halteposition mit einem Teil ihres Überstandes gegenüber dem Kupplungsvorsprung 5 und dessen Einführende 8 eingreifen, wie man es besonders deutlich in Fig.4 erkennt. Die Verdickung 13 überragt dabei den Bolzen 10 also zumindest um den Überstand dieser Kugeln 11 gegenüber der Außenseite des Haltevorsprunges 5 bzw. seines Einführendes 8.

Dabei sind die beiden als Halteteile 11 dienenden Kugeln auf einer gemeinsamen, durch die Mitte des Vorsprunges 5 bzw. auf einem Durchmesser dieses Vorsprunges 5 liegenden Linie oder Achse angeordnet, welche in der Weise quer zur Erstreckung des Ständers 2 und seines Vorsprunges 5 angeordnet ist, daß sich diese Verbindungslinie der beiden Kugeln 11 etwa parallel zu der von dem Fahrradrahmen oder dem Hinterrad des Fahrrades gebildeten Ebene oder der Verbindungslinie zwischen den Berührungspunkten der beiden Räder des Fahrrades mit der Stellfläche verläuft. Gleichzeitig hat der Vorsprung 5 und sein Einführende 8 gegenüber der Vertiefung 4 etwas Spiel, so daß eine gewisse Verschwenkung des Fahrrades möglich ist, bei der dann auch der Fahrradständer 1 und sein Einführende 8 etwas um die Achse verschwenkt wird, die durch die beiden Kugeln gebildet oder definiert wird. Dies erleichtert das Einführen und vor allem das "Treffen" der Vertiefung 4 mit dem Vorsprung 5. Dennoch ist die Stabilität der Halterung und Kupplung nicht beeinträchtigt, da sie aufgrund der in Gebrauchsstellung verriegelten Kugeln 11 kraftschlüssig ist.

An der Oberseite des relativ zu dem Vorsprung 5 gegen die Rückstellfeder 14, im Ausführungsbeispiel eine Druckfeder, verschiebbaren Bolzens 10 ist ein seinen Querschnitt und insbesondere den Querschnitt des Vorsprunges 5 übertreffender Kopf 15 für eine Tretbetätigung dieses Bolzens 10 angeordnet. Der Benutzer kann also seinen Fuß bequem neben dem eigentlichen freien Ende des Fahrradständers 1 auf diesen Kopf 15 aufsetzen, um in dessen Innerem den Bolzen 10 gegen die Rückstellfeder 14 nach unten zu verstellen und dadurch die Haltekugeln 11 für eine radiale Verschiebung freizugeben. Aufgrund der schrägen Oberfläche dieser Kugeln und gleichzeitig der der Hinterschneidung 12 kann dann bei einer Verstellung des Vorsprunges 5 und des Einführendes 8 die Kugel jeweils nach innen zurückweichen. Es ist also nicht erforderlich, diese als Kugeln ausgebildeten Halteteile 11 für das Auskuppeln zurückzuziehen, da sie aufgrund der Formgebung nach dem Verstellen der Verdickung 13 in Richtung des Pfeiles Pf1, also nach unten, selbsttätig in das Innere des Einführendes 8 und damit des Haltevorsprunges 5 zurückweichen können. Aufgrund der kegeligen oder konischen Form der Verdickung 13 werden sie nach dem Freigeben des Kopfes 15 wieder selbsttätig nach außen verstellt und in dieser Lage fixiert. Hat also ein Benutzer zunächst den Bolzen 10 gegen die Rückstellfeder 14 nach unten bewegt, kann er das Einführende 8 des Vorsprunges 5 in die Vertiefung 4 einführen. Läßt er nunmehr den Kopf 15 los, verschiebt sich der Bolzen 10 aufgrund der Feder 14 selbsttätig entgegen der Richtung des Pfeiles Pf1 nach oben, verschiebt die Halteteile oder Kugeln 11 nach außen und verriegelt sie in dieser Sperrstellung. Für das Lösen der Kupplung genügt es, wiederum auf den Tritt oder Kopf 5 zu drücken, um die Kupplung lösen zu können.

Das schon erwähnte Schloß 9 kann nun dazu dienen, diese Verstellbarkeit des Bolzens 10 zu unterbinden. Das Schlüsselloch zum Entriegeln des Schlosses 9 kann dabei in dem Betätigungskopf 15 für den verstellbaren Bolzen 10 angeordnet sein, wie es in den Zeichnungen angedeutet ist. Das im Inneren beispielsweise dieses Betätigungskopfes 15 befindliche Schloß 9 fixiert also den Bolzen 10 in Gebrauchsstellung gegen seine Verstellung in die Freigabeposition für die Haltekörper 11.

Fig.4 zeigt, daß der Bodenanker ein geprägtes Blechteil sein kann, welches unterhalb der Oberseite 3 weitgehend hohl ist. Es kann jedoch auch ein Teil aus Vollmaterial sein, wobei unter Umständen auch ein widerstandsfähiger Kunststoff in Frage kommt.

Der Fahrradständer 1 ist schwenkbar an einem Zweirad befestigt und kann mit seinem freien Ende 5 an einem Bodenanker 2 lösbar kraft- und/oder formschlüssig befestigt werden, um die Standfestigkeit des mit diesem Fahrradständer 1 abgestützten Zweirades zu verbessern. Der Bodenanker 2 ist dabei ein oberseitig flaches, gegenüber der Stellfläche praktisch nicht oder kaum überstehendes Bodenteil mit einer nach oben an seiner Oberseite 3 offenen Kupplungsvertiefung 4, in die ein am freien Ende des Ständers 1 angeordneter Haltevorsprung 5 mit einem Einführende 8 paßt, das innerhalb der Vertiefung 4 verrastbar und sperrbar und vorzugsweise noch mittels eines Schlosses 9 sicherbar ist.

## Patentansprüche

1. Fahrradständer (1) mit Bodenanker (2), wobei der Fahrradständer (1) schwenkbar und gegebenenfalls lösbar an einem Fahrrad - mit oder ohne Hilfsmotor oder an einem Motorfahrrad (Mofa) - anbringbar ist oder angreift und das Fahrrad in einer Gebrauchsstellung mit seinem vom Fahrrad abgewandten freien Ende gegenüber einer Stellfläche abstützt, wobei ein mit der Stellfläche für das Fahrrad fest verbindbarer Bodenanker (2) vorgesehen ist, mit dem das freie Ende des Fahrradständers (1) lösbar kuppelbar ist, **dadurch gekennzeichnet,** daß der Bodenanker (2) ein oberseitig flaches Bodenteil mit einer nach oben an der Oberseite (3) offenen Vertiefung (4) ist, welche Vertiefung (4) in Gebrauchsstellung abwärts gerichtet ist, und daß an dem im eingebauten Zustand dem Fahrrad abgewandten freien Ende des Ständers (1) ein in diese Vertiefung (4) passender Haltevorsprung (5) angeordnet ist.

2. Fahrradständer nach Anspruch 1, dadurch gekennzeichnet, daß der Abstand der Oberseite (3) des Bodenteiles (2) von seiner Unterseite (6) kleiner als die größte horizontale Abmessung dieses Bodenteiles ist.

3. Fahrradständer nach Anspruch 1 oder 2, dadurch gekennzeichnet, daß das Bodenteil (2) mit seiner Unterseite (6) auf der Stellfläche für Fahrräder oder einer Aussparung in dieser Stellfläche aufliegend befestigbar, insbesondere unlösbar befestigbar ist.

4. Fahrradständer nach einem der Ansprüche 1 bis 3, dadurch gekennzeichnet, daß das Bodenteil (2) im Bereich der Vertiefung (4) seine größte Dicke hat und dem Rand der Vertiefung (4) benachbarte Teile seiner Oberseite (3) zu dem Rand hin schräg oder abgerundet derart verlaufen, daß die Dicke des Bodenteiles (2) zu wenigstens einem Randbereich hin, insbesondere zu seinem umlaufenden Rand hin abnimmt.

5. Fahrradständer nach einem der Ansprüche 1 bis 4, dadurch gekennzeichnet, daß die Vertiefung (4) an ihrem Eintritt einen an der Oberseite (3) erweiterten und sich nach unten verengenden oder verjüngenden Einführtrichter (7) aufweist.

6. Fahrradständer nach einem der Ansprüche 1 bis 4, dadurch gekennzeichnet, daß der Haltevorsprung (5) ein abgerundetes oder sich verjüngendes oder konisches Einführende (8) aufweist, insbesondere kugelförmig ausgebildet ist.

7. Fahrradständer nach einem der Ansprüche 1 bis 6, dadurch gekennzeichnet, daß das Bodenteil (2) eine etwa kreisrunde oder ovale Außenform hat.

8. Fahrradständer nach einem der Ansprüche 1 bis 7, dadurch gekennzeichnet, daß die Vertiefung (4) als nach unten geschlossenes Sackloch ausgebildet ist.

9. Fahrradständer nach einem der Ansprüche 1 bis 8, dadurch gekennzeichnet, daß die Kupplung zwischen dem freien Ende des Fahrradständers (1) mit dem dort vorgesehenen Haltevorsprung (5) und dem Bodenteil (2) eine lösbare Rastkupplung ist.

10. Fahrradständer nach einem der Ansprüche 1 bis 9, dadurch gekennzeichnet, daß die Kupplung zwischen Fahrradständer (1) und Bodenteil (2) ein Sperrschloß (9) aufweist, mit welchem die Kupplung in Kuppelposition gegen ein Lösen sperrbar ist.

11. Fahrradständer nach Anspruch 10, dadurch gekennzeichnet, daß der Fahrradständer und/oder das Bodenteil ein beim Zusammenstecken der Teile selbsttätig einrastendes Schloß aufweist, dessen Riegel zum Lösen der Kupplung zurückziehbar, insbesondere mittels eines Schlüssels öffenbar ist.

12. Fahrradständer nach einem der Ansprüche 1 bis 11, dadurch gekennzeichnet, daß der in die Vertiefung (4) des Bodenteiles (2) passende Haltevorsprung (5,8) einen gegen die Kraft einer Rückstellfeder (14) etwa in Verlängerung des Fahrradständers (1) verstellbaren Bolzen (10) und in seinem in die Vertiefung (4) eingreifenden Einführende (8) wenigstens einen über seine Kontur hinaus verstellbaren Halteteile (11) zum Eingreifen in eine Hinterschneidung oder Erweiterung (12) der Vertiefung (4) aufweist, wobei der verstellbare Bolzen (10) in seiner Ausgangslage das Halteteil (11) in dessen über die Kontur des Einführendes (8) des Vorsprunges (5) ragender Lage festlegt und in gegen die Federkraft verstellter Position zum Inneren des Vorsprunges hin freigibt.

13. Fahrradständer nach Anspruch 12, dadurch gekennzeichnet, daß der innerhalb des Haltevorsprunges (5) verstellbare Bolzen (10) eine Verdickung (13) aufweist, die in Ausgangslage vorzugsweise mehrere, beispielsweise zwei Haltekörper oder -teile (11) in Sperrstellung hält und beim Verschieben in axialer Richtung gegen die Rückstellkraft mittels eines gegenüber der Verdickung (13) verminderten Querschnittes für eine Verstellung ins Innere des Haltevorsprunges (5) freigibt.

14. Fahrradständer nach Anspruch 12 oder 13, dadurch gekennzeichnet, daß als durch den verstellbaren Bolzen (10) sperrbares Halteteil (11) eine oder mehrere Kugeln vorgesehen sind und als Hinterschneidung (12) in der Vertiefung (4) eine insbesondere an dem gesamten Innenumfang der Vertiefung (4) umlaufende, in Gebrauchsstellung etwa horizontal umlaufende, Rille vorgesehen ist, in welche die Kugel oder die Kugeln in ihrer Halteposition mit zumindest einem Teil ihres Überstandes gegenüber dem Kupplungsvorsprung (5) eingreifen.

15. Fahrradständer nach einem der Ansprüche 12 bis 14, dadurch gekennzeichnet, daß wenigstens zwei als Halteteile (11) dienende Kugeln auf einer gemeinsamen, insbesondere durch die Mitte des Vorsprunges (5) oder auf einem Durchmesser des Vorsprunges (5) liegenden Achse angeordnet sind, welche in der Weise quer zu der Erstreckung des Ständers (1) angeordnet ist, daß sie etwa parallel zu der von dem Fahrradrahmen gebildeten Ebene verläuft und daß der Vorsprung (5) gegenüber der Vertiefung (4) Spiel hat.

16. Fahrradständer nach einem der Ansprüche 12 bis 15, dadurch gekennzeichnet, daß an der Oberseite des relativ zu dem Haltevorsprung (5) gegen eine Rückstellfeder (14), insbesondere eine Druckfeder, verschiebbaren Bolzens (10) ein seinen Querschnitt und insbesondere den des Vorsprunges (5) übertreffender Kopf (15) für eine Tretbetätigung angeordnet ist.

17. Fahrradständer nach einem der Ansprüche 10 bis 16, dadurch gekennzeichnet, daß das Schlüsselloch zum Entriegeln des Schlosses (9) in dem Betätigungskopf (15) für den verstellbaren Bolzen (10) angeordnet ist und das im Inneren befindliche Schloß (9) den Bolzen (10) in Gebrauchsstellung gegen seine Verstellung in Freigabeposition für die Haltekörper (11) fixiert.

## Claims

1. A bicycle stand (1) with ground anchor (2), wherein the bicycle stand (1) engages with or can be swivellably and optionally releasably attached to a bicycle, with or without auxiliary motor - or to a moped - and, in its position of use, supports the bicycle on a supporting surface with its free end remote from the bicycle, wherein a ground anchor (2) which can be firmly fixed to the bicycle supporting surface is provided which is releasably attachable to the free end of the bicycle stand (1), characterised in that the ground anchor (2) is a base part which is flat on its upper side, with a recess (4) open from above on its upper side (3), this recess (4) being directed downwards in its position of use, and that a holding projection (5) which fits into this recess (4) is disposed on the free end of the stand (1) which is remote from the bicycle when it is in its installed state.

2. A bicycle stand according to claim 1, characterised in that the distance from the upper side (3) of the base part (2) to its lower side (6) is smaller than the greatest horizontal dimension of this base part.

3. A bicycle stand according to claim 1 or 2, characterised in that the base part (2) can be attached to the supporting surface for bicycles with its lower side (6) on this supporting surface, or lying on top of a recess in this supporting surface, especially so that it cannot be released.

4. A bicycle stand according to one of claims 1 to 3, characterised in that the base part (2) has its greatest thickness in the area of the recess (4) and parts of its upper side (3) adjacent to the edge of the recess (4) extend towards the edge in an oblique or rounded manner so that the thickness of the base part (2) is reduced towards at least one edge area, especially to its circumferential edge.

5. A bicycle stand according to one of claims 1 to 4, characterised in that at its entrance, the recess (4) has an insertion hole (7), expanded on the upper side (3) and narrowing or tapering in a downwards direction.

6. A bicycle stand according to one of claims 1 to 4, characterised in that the holding projection (5) has a rounded or tapering or conical, especially spherical, insertion end (8).

7. A bicycle stand according to one of claims 1 to 6, characterised in that the base part (2) has an approximately round or oval outer shape.

8. A bicycle stand according to one of claims 1 to 7, characterised in that the recess (4) is configured as a blind hole closed at the bottom.

9. A bicycle stand according to one of claims 1 to 8, characterised in that the connection between the free end of the bicycle stand (1) with the holding projection (5) which is provided there and the base part (2) is a releasable locking connection.

10. A bicycle stand according to one of claims 1 to 9, characterised in that the connection between the bicycle stand (1) and the base part (2) has a lock (9) via which the connection can be secured in the connected position and prevented from being released.

11. A bicycle stand according to claim 10, characterised in that the bicycle stand and/or the base part has an automatically-engaging lock when the parts are pushed together, the latch of which can be pulled back, especially by means of a key, to release the connection.

12. A bicycle stand according to one of claims 1 to 11, characterised in that the holding projection (5, 8) which fits into the recess (4) of the base part (2) has a bolt (10) which is adjustable approximately in an extension of the bicycle stand (1) against the force of a return spring (14) and has at least one holding part (11) in its insertion end (8) which engages in the recess (4) which is adjustable beyond its contours to engage in an undercut or expansion (12) of the recess (4), wherein in its starting position, the adjustable bolt (10) fixes the holding part (11) in its position which extends beyond the contour of the insertion end (8) of the projection (5), and in its position adjusted against the resilient force, releases it towards the inside of the projection.

13. A bicycle stand according to claim 12, characterised in that the bolt (10), adjustable within the holding projection (5), has a wider part (13) which, in its starting position, preferably holds a plurality of, for example two, holding members or parts (11) in a locked position and when moved in an axial direction against the resilient force by means of a cross-section which is reduced with regard to the wider part (13), releases it for Emovement into the inside of the holding projection (5).

14. A bicycle stand according to claims 12 or 13, characterised in that one or more balls are provided as a holding part (11) which is lockable by the adjustable bolt (10), and a groove which especially extends about the entire inner circumference of the recess (4) and extends approximately horizontally in its position of use is provided as an undercut (12) in the recess (4), in which the ball or balls engage with regard to the connection projection (5) with at least part of their projection in their holding position.

15. A bicycle stand according to one of claims 12 to 14, characterised in that at least two balls serving as holding parts (11) are disposed on a common axis, especially lying through the centre of the projection (5) or on a diameter of the projection (5), this axis being disposed transverse to the extent of the stand (1) in such a way that it extends approximately parallel to the plane formed by the bicycle frame and that the projection (5) has some play with regard to the recess (4).

16. A bicycle stand according to one of claims 12 to 15, characterised in that a head (15), extending beyond its cross-section and especially that of the projection (5) is disposed for foot actuation on the upper side of the bolt (10), which is adjustable relative to the holding projection (5) against a return spring (14), especially a compression spring.

17. A bicycle stand according to one of claims 10 to 16, characterised in that the keyhole for unlocking the lock (9) is disposed in the actuation head (15) for the adjustable bolt (10) and that in its position of use, the lock (9) disposed in the interior prevents the bolt (10) from being moved into the release position for the holding members (11) .

## Revendications

1. Support de bicyclette (1) avec pièce d'ancrage au sol (2), le support de bicyclette (1) s'accrochant sur ou pouvant être monté de façon pivotante et éventuellement détachable sur une bicyclette - avec ou sans moteur auxiliaire, ou sur un vélo à moteur (mobylette) - et la bicyclette s'appuyant dans une position d'utilisation avec son extrémité libre opposée à la bicyclette par rapport à un emplacement de stationnement, une piëce d'ancrage au sol (2) pouvant être reliée de façon fixe à l'emplacement de stationnement de la bicyclette étant prévu, avec laquelle l'extrémité libre du support de bicyclette (1) peut âtre accouplée de façon détachable, caractérisé en ce que la pièce d'ancrage au sol (2) est une pièce au sol à face supérieure plate avec un creux (4) ouvert vers le haut au niveau de la face supérieure (3), lequel creux (4) étant dirigé vers le bas en position d'utilisation et en ce qu'un élément d'attache, faisant saillie (5) et s'adaptant dans ce creux (4), est disposé à l'extrémité libre du support (1) opposée à la bicyclette à l'état déplié.

2. Support de bicyclette selon la revendication 1, caractérisé en ce que l'espacement entre la face supérieure (3) de la pièce au sol (2) et sa face inférieure (6) est plus petit que l'étendue horizontale maximale de cette pièce au sol.

3. Support de bicyclette selon la revendication 1 ou 2, caractérisé en ce que la pièce au sol (2) avec sa face inférieure (6) peut être fixée en applique sur l'emplacement de stationnement pour bicyclettes ou dans une rainure aménagée dans cet emplacement de stationnement, en particulier de façon indétachable.

4. Support de bicyclette selon l'une des revendications 1 à 3, caractérisé en ce que la pièce au sol (2) peut présenter son épaisseur maximale dans la zone du creux (4) et les parties de sa face supérieure (3) voisines du bord du creux (4) s'étendre en biais ou en arrondi jusqu'au bord, de telle sorte que l'épaisseur de la pièce au sol (2) diminue jusqu'à au moins une zone en bordure, en particulier jusqu'à son bord périphérique.

5. Support de bicyclette selon l'une des revendications 1 à 4, caractérisé en ce que le creux (4) comporte en son entrée un cône d'entrée (7) s'élargissant au niveau de la face supérieure (3) et se rétrécissant ou s'effilant vers le bas

6. Support de bicyclette selon l'une des revendications 1 à 4, caractérisé en ce que l'élément d'attache faisant saillie (5) comporte une extrémité d'introduction arrondie ou s'effilant ou encore conique (8), en particulier de forme sphérique.

7. Support de bicyclette selon l'une des revendications 1 à 6, caractérisé en ce que la pièce au sol (2) présente une forme extérieure approximativement circulaire ou ovale.

8. Support de bicyclette selon l'une des revendications 1 à 7, caractérisé en ce que le creux (4) est conçu sous la forme d'un trou borgne fermé vers le bas.

9. Support de bicyclette selon l'une des revendications 1 à 8, caractérisé en ce que l'accouplement entre l'extrémité libre du support de bicyclette (1) avec l'élément d'attache faisant saillie prévu en cet endroit (5) et la pièce au sol (2) est un accouplement à encliquetage détachable.

10. Support de bicyclette selon l'une des revendications 1 à 9, caractérisé en ce que l'accouplement entre le support de la bicyclette (1) et la pièce au sol (2) comporte une serrure de blocage (9) grâce à laquelle l'accouplement peut être protégé contre un desserrage en position couplée.

11. Support de bicyclette selon la revendication 10, caractérisé en ce que le support de la bicyclette et/ou la pièce au sol, comporte(nt) une serrure s'encliquetant automatiquement lors de l'assemblage des pièces, dont le verrou peut être retiré pour défaire l'accouplement, et en particulier être ouvert au moyen d'une clé.

12. Support de bicyclette selon l'une des revendications 1 à 11, caractérisé en ce que l'élément d'attache faisant saillie (5) qui s'adapte dans le creux (4) de la pièce au sol (2) comporte un boulon (10) déplaçable contre la force d'un ressort de rappel (14) à peu près dans le prolongement du support de bicyclette (1) et dans son extrémité d'introduction (8) s'engageant dans le creux (4), au moins un élément d'attache (11) pouvant être déplacé au-delà de son contour, destiné à s'engager dans une dépouille inverse ou une extension (12) du creux (4), le boulon déplaçable (10), dans sa position de départ, fixant ce faisant l'élément d'attache (11) en position s'encliquetant sur le contour de l'extrémité d'introduction (8) de l'élément faisant saillie (5) et, en position déplacée contre la force du ressort, le libérant vers l'intérieur de l'élément faisant saillie (5).

13. Support de bicyclette selon la revendication 12, caractérisé en ce que le boulon déplaçable (10) à l'intérieur de l'élément d'attache faisant saillie (5) comporte un renflement (13), qui, en position de départ, maintient de préférence plusieurs, par exemple deux dispositifs d'attache ou éléments d'attache (11) en position de blocage, et lors de son déplacement dans la direction axiale contre la force de rappel au moyen d'une section transversale réduite par rapport au renflement (13) les libère pour un déplacement vers l'intérieur de l'élément d'attache faisant saillie (5).

14. Support de bicyclette selon la revendication 12 ou 13, caractérisé en ce que, en tant qu'élément d'attache (11) blocable par le boulon déplaçable (10), une ou plusieurs boule(s) ou bille(s) est/sont prévue(s) et, en tant que dépouille inverse (12) dans le creux (4), une rainure à peu près horizontale en position d'utilisation et faisant tout le tour de la périphérie intérieure du creux (4), dans laquelle la ou les boule(s) s'engage(nt) dans leur position de blocage avec au moins une partie de ce qui en dépasse par rapport à l'élément d'attache faisant saillie (5).

15. Support de bicyclette selon l'une des revendications 12 à 14, caractérisé en ce qu'au moins deux boules faisant office d'éléments d'attache (11) sont disposées sur un axe commun, passant en particulier par le centre de l'élément faisant saillie (5) ou sur un diamètre de l'élément faisant saillie (5), qui est disposé de façon transversale au prolongement du support (1), de sorte qu'il s'étend à peu près parallèlement au plan formé par le cadre de la bicyclette et que l'élément faisant saillie (5) a du jeu par rapport au creux (4).

16. Support de bicyclette selon l'une des revendications 12 à 15, caractérisé en ce qu'est disposée sur la face supérieure du boulon déplaçable (10) par rapport à l'élément d'attache faisant saillie (5) contre un ressort de rappel (14), en particulier un ressort à pression, une tête (15) dépassant de sa section transversale et en particulier de celle de l'élément faisant saillie (5) pour un actionnement au pied.

17. Support de bicyclette selon l'une des revendications 10 à 16, caractérisé en ce que le trou de la serrure pour déverrouiller la serrure (9) peut être disposé dans la tâte de commande (15) pour le boulon déplaçable (10) et que la serrure (9) placée à l'intérieur immobilise le boulon (10) en position d'utilisation et le protège d'un déplacement en position de libération des éléments d'attache (11).
